# EUROPÄISCHE PATENTANMELDUNG

(11) **EP 4 344 870 A1**
(43) Veröffentlichungstag der Anmeldung: **03.04.2024**
(21) Anmeldenummer: 23197643.2
(22) Anmeldetag: 15.09.2023
(51) Int. Cl.: B32B 27/06, C09J 7/40

(54) **RELEASELINER**

(30) Priorität: 30.09.2022 DE 102022125435
(71) Anmelder: TESA SE, 22848 Norderstedt (DE)
(72) Erfinder: RETTIG, Florian, 22297 Hamburg (DE); NEUBERT, Ingo, 22850 Norderstedt (DE)
(74) Vertreter: tesa SE

(57) **Zusammenfassung**

Es sollte ein Releaseliner zur Verfügung gestellt werden, der sich in wenigen Verfahrensschritten und somit sehr rationell herstellen lässt, eine sehr gute Interlaminathaftung seiner Lagen aufweist und zudem eine geringe Tendenz zum Verformen und Verlassen der Planlage zeigt. Dies gelingt mit einem Releaseliner zur Verwendung auf Haftklebmassen, der
- eine Lage (POL), umfassend eine oder mehrere Schichten und enthaltend in jeder Schicht zu insgesamt mindestens 80 Gew.-%, jeweils bezogen auf das Gesamtgewicht der Schicht, ein oder mehrere Polyolefine,
wobei jede Schicht der Lage (POL) Polypropylen enthält;
- mindestens eine Schicht (PEL), enthaltend zu mindestens 80 Gew.-%, bezogen auf das Gesamtgewicht der Schicht (PEL), Polyethylen,
umfasst, wobei jede Schicht (PEL) durch eine Verankerungsschicht mit der Lage (POL) verbunden ist. Ein weiterer Gegenstand der Erfindung ist ein Verfahren zur Herstellung eines erfindungsgemäßen Releaseliners, wobei der Schichtaufbau des Releaseliners mittels Coextrusion erzeugt wird.

## Beschreibung

Die Erfindung betrifft das technische Gebiet der Releaseliner, wie sie häufig zum Schutz von Haftklebmassen verwendet werden. Spezifischer betrifft die Erfindung einen Releaseliner, der in seinem Aufbau mindestens zwei durch eine Verankerungsschicht miteinander verbundene, Polyolefin-basierte Schichten umfasst.

Klebebänder, die ein- oder beidseitig mit Klebstoffen beschichtet sind, werden am Ende des Herstellungsprozesses zumeist zu einer Rolle in Form einer archimedischen Spirale oder zu einer Kreuzspule aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen "Releaseliner" oder kurz "Liner" bekannt. Neben der Abdeckung von ein- oder doppelseitig klebenden Klebebändern werden Liner auch zur Eindeckung von Etiketten eingesetzt.

Die Releaseliner sorgen des Weiteren dafür, dass die Klebmasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner ist nicht Bestandteil eines Klebebandes oder Etiketts, sondern nur ein Hilfsmittel zu deren Herstellung, Lagerung oder für die Weiterverarbeitung. Dementsprechend ist ein Liner - im Gegensatz zum Beispiel zu einem Klebebandträger - nicht fest mit einer Klebstoffschicht verbunden.

Als Releaseliner werden industriell Papier- oder Folienträger verwendet, die mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als abhäsive Beschichtungsmassen, die auch Releasebeschichtung genannt werden, können eine Vielzahl verschiedener Materialien eingesetzt werden: Wachse, fluorierte oder teilfluorierte Verbindungen und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt.

Daneben sind auch Liner mit Polyolefin-Trennschichten in den Fokus des Interesses gerückt.

WO 2020/042139 A1 beschreibt ein Laminat, das
- eine Faserschicht aus Propylen-basierten Polymerfasern,
- einen Belag aus einem oder mehreren Ethylen-basierten Polymeren,
- eine zwischen der Faserschicht und dem Belag angeordnete Verankerungsschicht
umfasst, wobei die Verankerungsschicht aus mindestens 50 Gew.-% eines kristallinen Blockkomposits (CBC) und einer optionalen Mischkomponente zusammengesetzt ist und das CBC
(i) ein isotaktisches kristallines Propylen-Homopolymer (iPP);
(ii) ein Ethylen/Propylen-Copolymer; und
(iii) einen Diblock der Formel (EP)-(iPP)
umfasst; wobei
das CBC einen Blockkomposit-Index (CBCI) von 0,1 bis 1,0 aufweist und
das Laminat eine Abzugskraft von 20 N/15 mm bis 40 N/15 mm aufweist.

EP 2 354 203 A1 hat ein Haftklebeband zum Gegenstand, welches bei Temperaturen von mindestens 90 °C und mehr benutzt werden kann und
eine Haftklebmasseschicht; und
einen Releaseliner umfasst, der auf der Oberfläche zumindest einer Seite der Haftklebmasseschicht angeordnet ist, wobei der Releaseliner
   eine Basisschicht enthaltend ein Polyolefinharz; und
   eine Trennschicht, die Low-Density Polyethylen enthält und auf mindestens einer Seite der Basisschicht so angeordnet ist, dass sie mit der Haftklebmasseschicht in Kontakt ist,
aufweist.

EP 2 298 844 A1 offenbart ein Acrylat-Haftklebeband, das eine Haftklebmasseschicht und einen Releaseliner aufweist und dadurch gekennzeichnet ist, dass:
die Haftklebmasseschicht eine mit Hohlräumen durchsetzte, anorganischen Füllstoff enthaltende Acrylat-Haftklebmasseschicht ist, welche ein Acrylatpolymer gebildet aus einer Acrylat-Monomer-Mischung enthaltend
einen Alkyl(meth)acrylatester (a) aufweisend eine C₁-C₁₄-Alkylgruppe und ein eine polare Gruppe enthaltendes Vinylmonomer (b) zu einem Gewichtsanteil [(a)/(b)] von 95/5 bis 91/9;
einen anorganischen Füllstoff zu einem Anteil von 0,1 Gewichtsteilen oder mehr und weniger als 2 Gewichtsteilen, bezogen auf 100 Gewichtsteile aller das Acrylatpolymer bildenden Monomere;
und Hohlräume;
und dass der Releaseliner eine mindestens dreischichtige Struktur umfassend eine Low Density Polyethylen-Schicht als eine Oberflächenschicht, eine gemischte Harzschicht enthaltend ein Low Density Polyethylen und ein High Density Polyethylen als Harzkomponenten als die andere Oberflächenschicht und zusätzlich eine High Density Polyethylen-Schicht als Zwischenschicht aufweist.

EP 2 426 185 A1 beschreibt einen Artikelaufbau umfassend:
einen plastischen oder elastomeren Artikel;
ein doppelseitiges Klebeband umfassend klebende Vorder- und Rückseiten, deren jede eine Haftklebmasse umfasst;
einen Releaseliner, der eine Trennseite umfassend ein Trennmaterial in Kontakt mit, verbunden mit und leicht entfernbar von einer der vorgenannten klebenden Seiten und eine Linerrückseite aufweist; und
einen Anfasser, welcher mit der vorgenannten ersten Linerrückseite verbunden ist, wobei der vorgenannte Anfasser operativ daran angepasst ist, das Entfernen des Releaseliners vom Klebeband zu ermöglichen.

Gegenstand von WO 2017/039953 A1 ist ein Harz, das als Verankerungsschicht in einem mehrlagigen Aufbau genutzt werden kann, wobei das Harz
ein High Density Polyethylen mit einer Dichte von mehr als 0.960 g/cm³, wobei das High Density Polyethylen 1 bis 99 Gew.-% des Harzes ausmacht;
ein Maleinsäureanhydrid-gepfropftes High Density Polyethylen, wobei das Maleinsäureanhydrid-gepfropfte High Density Polyethylen 1 bis 99 Gew.-% des Harzes ausmacht; und
einen Katalysator umfassend mindestens eine Lewis-Säure
umfasst.

Schließlich beschreibt EP 3 278 984 A1 einen Releaseliner zur Verwendung auf Haftklebmassen, der
- eine außen liegende Silikon-Trennschicht (SR);
- eine Lage (POL), enthaltend in jeder ihrer Schichten zu insgesamt mindestens 50 Gew.-%, jeweils bezogen auf das Gesamtgewicht der Schicht, ein oder mehrere Polyolefine, wobei die Lage (POL) zu mindestens 60 Gew.-%, bezogen auf das Gesamtgewicht der Lage (POL), Polypropylen enthält; und
- eine außen liegende Schicht (PER), enthaltend zu mindestens 80 Gew.-%, bezogen auf das Gesamtgewicht der Schicht (PER), Polyethylen,
umfasst, wobei die Schicht (PER) durch einen Klebstoff mit der im Aufbau des Releaseliners nächstfolgenden Schicht verbunden ist. Der Klebstoff zur Verbindung der Lagen innerhalb des Releaseliners ist bevorzugt Polyurethan-basiert.

Gerade Releaseliner wie die in EP 3 278 984 A1 beschriebenen sind grundsätzlich recht leistungsfähig, der die verwendeten Kaschierkleber in der Regel den hohen Anforderungen an die Belastbarkeit der aneinander zu verankernden Folienschichten in z-Richtung - zum Beispiel beim Aufwickeln des Klebebandes zur Rolle oder Spule - gerecht werden. Allerdings ist ihre Herstellung recht teuer und technisch aufwändig, da mindestens zwei Folien extrudiert werden und diese dann in einem zusätzlichen Schritt aufeinander kaschiert werden müssen. Darüber hinaus stellt sich bei Aufbauten aus Polyolefin-Folien, die mittel Polyurethan-basierter Klebstoffe hergestellt werden, auch die Frage der Rezyklierbarkeit. Weiter werden Nachteile durch so genanntes "Curling" beobachtet - wenn nur auf einer Linerseite ein Kaschierkleber eingesetzt wird, zeigt der Liner häufig eine Tendenz zum Verformen und behält die gewünschte Planlage nicht bei.

Es war eine grundsätzliche Aufgabe der vorliegenden Erfindung, die aus dem Stand der Technik bekannten Nachteile zu beseitigen oder mindestens zu minimieren. Spezifischer war es eine Aufgabe der Erfindung, einen Releaseliner zur Verfügung zu stellen, der sich in wenigen Verfahrensschritten und somit sehr rationell herstellen lässt. Eine weitere Aufgabe der Erfindung war es, einen mehrlagigen Releaseliner zur Verfügung zu stellen, der eine sehr gute Interlaminathaftung der Lagen aufweist. Es war eine ergänzende Aufgabe der Erfindung, einen Releaseliner mit ausgeprägter Planlage und geringer Tendenz zum Verformen und Verlassen der Planlage zur Verfügung zu stellen.

Ein erster und allgemeiner Gegenstand der Erfindung, mit dem diese Aufgaben gelöst werden, ist ein Releaseliner zur Verwendung auf Haftklebmassen, umfassend
- eine Lage (POL), umfassend eine oder mehrere Schichten und enthaltend in jeder Schicht zu insgesamt mindestens 80 Gew.-%, jeweils bezogen auf das Gesamtgewicht der Schicht, ein oder mehrere Polyolefine,
wobei jede Schicht der Lage (POL) Polypropylen enthält;
- mindestens eine Schicht (PEL), enthaltend zu mindestens 80 Gew.-%, bezogen auf das Gesamtgewicht der Schicht (PEL), Polyethylen,
wobei jede Schicht (PEL) durch eine Verankerungsschicht mit der Lage (POL) verbunden ist.

Wie sich gezeigt hat, lässt sich ein derartiger Releaseliner im Wege einer Coextrusion und damit nur in einem einzigen Arbeitsschritt herstellen. Es ließ sich eine ausgezeichnete Verbundhaftung der Lagen konstatieren. Zudem war es möglich, den Liner sowohl in einem symmetrischen als auch in einem asymmetrischen Aufbau herzustellen. Neben der Tatsache, dass sich somit eine große Vielfalt an Designoptionen erschließt, erwies sich insbesondere der symmetrische Aufbau als äußerst vorteilhaft hinsichtlich einer konstanten Planlage des Releaseliners.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks allgemein nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie können zum Beispiel durch sehr langkettige und stark verknäuelte und/oder durch physikalisch oder chemisch vernetzte Makromoleküle hervorgerufen werden und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G`) und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt insbesondere dann als haftklebrig, wenn bei Raumtemperatur, hier definitionsgemäß bei 23°C, im Deformationsfrequenzbereich von 10° bis 10¹ rad/sec G` zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G`-Kurve innerhalb des Fensters liegt, das durch den Deformationsfrequenzbereich von einschließlich 10° bis einschließlich 10¹ rad/sec (Abszisse) sowie den Bereich der G`-Werte von einschließlich 10³ bis einschließlich 10⁷ Pa (Ordinate) aufgespannt wird. Für G" gilt dies entsprechend.

Der erfindungsgemäße Releaseliner umfasst eine Lage (POL), die eine oder mehrere Schichten umfasst und in jeder Schicht zu insgesamt mindestens 80 Gew.-%, jeweils bezogen auf das Gesamtgewicht der Schicht, ein oder mehrere Polyolefine enthält, wobei jede Schicht der Lage (POL) Polypropylen enthält. enthält. Unter einer "Lage" wird ein abgrenzbarer Teil des Schichtaufbaus des erfindungsgemäßen Releaseliners verstanden, wobei im Falle einer mehrschichtigen Lage die Schichten dieser Lage unmittelbar aufeinander folgen. Der Ausdruck ,,... in jeder Schicht ... enthält" erfasst entsprechend dem Vorstehenden auch eine einschichtige Lage und ist in diesem Fall als "... in dieser Schicht ... enthält" zu verstehen.

Bevorzugt umfasst die Lage (POL) eine Schicht (PPK), die zu mindestens 60 Gew.-%, stärker bevorzugt zu mindestens 70 Gew.-%, insbesondere zu mindestens 80 Gew.-%, beispielsweise zu mindestens 90 Gew.-%, jeweils bezogen auf das Gesamtgewicht der Schicht, Polypropylen enthält. Es hat sich gezeigt, dass sich derartige Polypropylengehalte vorteilhaft auf die thermische Stabilität der Schicht (PPK), der gesamten Lage (POL) und des erfindungsgemäßen Releaseliners auswirken. Besonders bevorzugt besteht die Schicht (PPK) aus Polypropylen, das zu maximal 15 Gew.-%, stärker bevorzugt zu maximal 10 Gew.-%, mit Farbmitteln abgemischt ist. Bevorzugt ist die Schicht (PPK) mittels Pigmenten oder organischem Farbstoff, die in Form eines Farbmasterbatches zugegeben wurden, eingefärbt.

Insbesondere besteht die Schicht (PPK) aus einem heterophasic Polypropylen-Copolymer mit einem Farbmittelanteil von maximal 15 Gew.-%, stärker bevorzugt mit einem Farbmittelanteil von maximal 10 Gew.-%.

Besonders bevorzugt weist das Material der Schicht (PPK) eine Schmelztemperatur von mindestens 160 °C auf. Das Polypropylen der Schicht (PPK) ist bevorzugt ein sogenanntes heterophasic PP-Copolymer (HECO PP, Impact PP). Ein derartiges Copolymer weist insbesondere eine hohe Temperaturstabilität auf. Die Temperaturstabilität, die sich aus der Schmelztemperatur ergibt, ist vergleichbar mit der von reinem Homo-PP. Ein heterophasic PP-Copolymer zeichnet sich aber durch eine bessere Flexibilität sowie geringere Festigkeit und geringere Sprödigkeit aus. Dies wird durch Copolymerisation von Propylen mit einem gewissen kleineren Anteil EP-Kautschuk erreicht.

In einer Ausführungsform des erfindungsgemäßen Releaseliners besteht die Lage (POL) aus einer Schicht (PPK).

In einer weiteren Ausführungsform des erfindungsgemäßen Releaseliners umfasst die Lage (POL) eine Schicht (PPK) und eine direkt auf die Schicht (PPK) folgende Polyolefinschicht (POK), welche mindestens 25 Gew.-%, stärker bevorzugt mindestens 30 Gew.-%, insbesondere mindestens 35 Gew.-% Poylethylen sowie mindestens 20 Gew.-%, stärker bevorzugt mindestens 30 Gew.-%, insbesondere mindestens 50 Gew.-% Polypropylen, jeweils bezogen auf das Gesamtgewicht der Polyolefinschicht (POK), enthält. Ganz besonders bevorzugt enthält die Polyolefinschicht (POK) mindestens 70 Gew.-%, stärker bevorzugt mindestens 80 Gew.-%, insbesondere mindestens 90 Gew.-%, jeweils bezogen auf das Gesamtgewicht der Polyolefinschicht (POK), eines Gemischs aus Polyethylen und Polypropylen in einem Gewichtsverhältnis PP / PE von 40 / 60 bis 80 / 20, insbesondere von 50 / 50 bis 70 / 30, beispielsweise von 55 / 45 bis 65 / 35. Besonders bevorzugt besteht die Polyolefinschicht (POK) aus einem solchen Gemisch aus Polypropylen und Polyethylen.

Besonders bevorzugt ist das Polypropylen der Polyolefinschicht (POK) ein heterophasisches PP-Copolymer, z.B. ein Impact Polypropylen. Das Polyethylen der Polyolefinschicht (POK) ist bevorzugt unter Metallocen-Katalyse hergestellt (mPE); insbesondere ist es ein so genanntes Linear Low Density Polyethylen (LLDPE). Über das PP/PE-Blendverhältnis können vorteilhaft die mechanischen Eigenschaften eines Verbundes aus jeweils einer oder mehreren Schichten (PPK) und (POK), insbesondere dessen Festigkeit, feinjustiert werden. Die mechanischen Eigenschaften dieses Verbundes wirken sich insbesondere bei einer Beschichtung des Verbundes mit einer Silikonreleasemasse aus. Besonders positiv kommt dies bei der Applikation des erfindungsgemäßen Releaseliners zur Geltung, insbesondere bei dessen maschineller Verarbeitung und bei dessen Anwendung, wenn ein damit abgedecktes Klebeband um Kurven verklebt wird. Besonders vorteilhaft weist der Releaseliner bzw. zumindest der beschriebene Verbund eine gute Dehnfestigkeit auf und wirkt auf diese Weise einer Verstreckung bzw. Überdehnung des Klebebands bei dessen Applikation und Verarbeitung entgegen. Bemerkenswert ist, dass ein Verbund aus den Schichten (PPK) und (POK) insofern eine besonders gute Balance zwischen den beiden gegensätzlichen Eigenschaften Dehnfähigkeit und Dehnfestigkeit erreicht.

Bevorzugt weisen die Rohstoffe für die Herstellung der Schichten (PPK) und (POK) und damit insbesondere die Schicht (PPK) bzw. die Schichten (PPK) und (POK) gewichtsbezogen weniger als 1000 ppm an Katalysatorgiften bezüglich des Hydrosilylierungskatalysators einer im Rahmen der Erfindung zwar bevorzugten, grundsätzlich aber optionalen Silikon-basierten Trennschicht auf. Andernfalls kann es zu Störungen der Silikonvernetzung kommen, wodurch die Releaseeigenschaften der Trennschichtschicht gestört werden können. Als Katalysatorgifte kommen insbesondere Phosphor- und Stickstoff-haltige Verbindungen, z.B. Phosphit-Stabilisatoren wie Irgafos 168 oder Irgafos TNPP, Gleitmittel oder Antistatika mit Amid- oder Amin-Funktionalitäten, z.B. Erucamid, in Frage. Besonders bevorzugt sind die Rohstoffe für die Herstellung der Schicht (PPK) bzw. der Schichten (PPK) und (POK) und damit insbesondere die Schicht (PPK) bzw. die Schichten (PPK) und (POK) frei von Katalysatorgiften bezüglich des Hydrosilylierungskatalysators einer Silikon-basierten Trennschicht.

In einer weiteren Ausführungsform umfasst die Lage (POL) eine Schicht (PPK) und an deren Ober- und Unterseite jeweils eine unmittelbar direkt auf die Schicht (PPK) folgende Polyolefinschicht (POK) wie vorstehend beschrieben. Die beiden Schichten (POK) können in dieser Ausführungsform grundsätzlich identische oder verschiedene Schichtdicken aufweisen, bevorzugt weisen sie verschiedene Schichtdicken auf.

Der erfindungsgemäße Liner umfasst ferner mindestens eine Schicht (PEL), die zu mindestens 80 Gew.-% Polyethylen enthält. Bevorzugt enthält die Schicht (PEL) zu mindestens 90 Gew.-%, stärker bevorzugt zu mindestens 95 Gew.-%, insbesondere zu mindestens 98 Gew.-%, beispielsweise zu mindestens 99 Gew.-%, jeweils bezogen auf das Gesamtgewicht der Schicht (PEL), Polyethylen. Ganz besonders bevorzugt besteht die Schicht (PEL) aus Polyethylen; sie kann dabei auch aus einem Blend bzw. einer Mischung aus unterschiedlichen Ethylen-Polymeren bestehen.

Bevorzugt ist das Polyethylen der Schicht (PEL) ein low-density-PE (LDPE); besonders bevorzugt besteht die Schicht (PEL) aus LDPE.

Bevorzugt weist die Schicht (PEL) eine Schichtdicke von 10 bis 45 µm, stärker bevorzugt von 12 bis 40 µm, insbesondere von 15 bis 33 µm auf.

Das LDPE der Schicht (PEL) hat bevorzugt eine Dichte von weniger als 0,925 g/cm3, insbesondere von weniger als 0,92 g/cm3. Eine derart ausgestattete Schicht (PEL) weist besonders geringe Trennkräfte bzw. Abrollkräfte gegenüber Haftklebmassen auf; daher kann auf eine zusätzliche Silikon-Releasebeschichtung verzichtet werden. Die Schicht (PEL) weist daher auch eine besonders hohe Hitzebeständigkeit auf. Daraus wiederum ergibt sich die Möglichkeit, eine Anfasshilfe durch einen Heißsiegelprozess auf die Schicht (PEL) aufzubringen. Bevorzugt ist daher die Schicht (PEL) eine Außenschicht des erfindungsgemäßen Releaseliners, und auf einem Teil der Schicht (PEL) ist eine Anfasshilfe aufgebracht.

Erfindungsgemäß ist jede Schicht (PEL) des Releaseliners durch eine Verankerungsschicht mit der Lage (POL) verbunden. Auf diese Weise ist es möglich geworden, den Schichtaufbau des erfindungsgemäßen Releaseliners im Wege einer Coextrusion und somit wesentlich effizienter als im herkömmlichen Verfahren einer Extrusion verschiedener Folien und deren Lamination zum Releaseliner-Aufbau. Wie sich gezeigt hat, kann ein erfindungsgemäßer Releaseliner den anspruchsvollen Belastungen in der Anwendung besser gerecht werden als herkömmliche, insbesondere unter Verwendung von Kaschierklebstoffen hergestellte Liner.

Die Verankerungsschicht umfasst bevorzugt mindestens ein Polyolefin, besonders bevorzugt mindestens ein Polyolefin-Copolymer. Insbesondere umfasst die Verankerungsschicht mindestens ein Ethylen-Propylen-Blockcopolymer, ganz besonders bevorzugt umfasst sie ein Ethylen-Propylen-Blockcopolymer zu mindestens 80 Gew.-%, insbesondere zu mindestens 90 Gew.-%, zum Beispiel zu mindestens 95 Gew.-%. Sehr bevorzugt besteht die Verankerungsschicht aus einem oder mehreren Ethylen-Propylen-Blockcopolymeren.

Die Verankerungsschicht beziehungsweise die Verankerungsschichten des Releaseliners weisen bevorzugt eine Schichtdicke von maximal 20 µm, stärker bevorzugt von maximal 15 µm, insbesondere von maximal 10 µm, besonders bevorzugt von maximal 8 µm auf.

Der erfindungsgemäße Releaseliner kann - je nachdem, wie viele Schichten (PEL) er umfasst, eine oder zwei Verankerungsschichten umfassen. Sofern zwei Verankerungsschichten umfasst sind, gelten die vorstehend als irgendwie bevorzugt gekennzeichneten Ausführungen grundsätzlich für beide Verankerungsschichten.

In einer Ausführungsform umfasst der erfindungsgemäße Releaseliner
- eine Lage (POL) bestehend aus einer Schicht (PPK) und
- auf der Ober- und Unterseite der Schicht (PPK) jeweils eine Schicht (PEL),
wobei jede Schicht (PEL) durch eine Verankerungsschicht mit der Schicht (PPK) verbunden ist. Der Releaseliner umfasst in dieser Ausführungsform somit die Schichtenabfolge

### (PEL)-Verankerungsschicht-(PPK)-Verankerungsschicht-(PEL).

Bevorzugt haben sowohl die beiden Schichten (PEL) als auch die beiden Verankerungsschichten im Wesentlichen identische Schichtdicken, so dass der Aufbau des Releaseliners in dieser Ausführungsform bevorzugt symmetrisch ist.

In einer weiteren Ausführungsform umfasst der erfindungsgemäße Releaseliner
- eine Lage (POL) bestehend aus einer Schichtenabfolge (POK)-(PPK)-(POK) und
- auf einer Seite der Lage (POL) eine Schicht (PEL),
wobei die Schicht (PEL) durch eine Verankerungsschicht mit der Lage (POL), konkreter mit einer der Schichten (POK), verbunden ist. Insgesamt umfasst der Releaseliner in dieser Ausführungsform also die Schichtenabfolge

### (POK)-(PPK)-(POK)-Verankerungsschicht-(PEL).

Der Releaseliner dieser Ausführungsform ist somit asymmetrisch aufgebaut. Bevorzugt haben darüber hinaus die beiden Schichten (POK) unterschiedliche Schichtdicken; besonders ist die Schichtdicke der mit der Verankerungsschicht verbundenen Schicht (POK) kleiner als die Schichtdicke der nicht mit der Verankerungsschicht verbundenen Schicht (POK).

Unabhängig von seinem Schichtaufbau umfasst der erfindungsgemäße Releaseliner über die bisher beschriebenen Schichten hinaus bevorzugt mindestens eine Silikon-Trennschicht. Selbstverständlich ist die Silikon-Trennschicht eine außen liegende Schicht des Releaseliners, sie bildet also eine der beiden den Schichtaufbau des Liners nach außen begrenzenden Schichten und weist somit eine freie Seite auf.

Die Silikon-Trennschicht lässt sich bevorzugt auf ein vernetzbares Silikonsystem zurückführen. Zu diesen vernetzbaren Silikonsystemen zählen Mischungen aus Vernetzungskatalysatoren und so genannten thermisch härtbaren kondensations- oder additionsvernetzenden Polysiloxanen. Die Silikon-Trennschicht kann auf lösungsmittelhaltige oder lösungsmittelfreie Systeme zurückgeführt werden, bevorzugt lässt sie sich auf ein lösungsmittelhaltiges System zurückführen. Die Silikon-Trennschicht lässt sich bevorzugt auf ein strahlungs- (UV- oder Elektronenstrahl-), kondensations- oder additionsvernetzendes System zurückführen, besonders bevorzugt auf ein additionsvernetzendes System.

Silikonbasierende Trennmittel auf additionsvernetzender Basis lassen sich in der Regel durch Hydrosilylierung härten. Die Formulierungen zum Herstellen dieser Trennmittel umfassen üblicherweise die folgenden Bestandteile:
ein Alkenylgruppen enthaltendes, lineares oder verzweigtes Polydiorganosiloxan,
ein Polyorganowasserstoffsiloxan-Vernetzungsmittel sowie
einen Hydrosilylierungskatalysator.

Als Katalysatoren für additionsvernetzende Silikonsysteme (Hydrosilylierungs-Katalysatoren) haben sich insbesondere Platin oder Platinverbindungen, wie zum Beispiel der Karstedt-Katalysator (eine Pt(0)-Komplexverbindung) bewährt.

Spezieller können derartige additionsvernetzende Trennbeschichtungen folgende Komponenten umfassen:
- ein lineares oder verzweigtes Polydimethylsiloxan, welches aus ca. 80 bis 200 Dimethylsiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive^{®} 921 oder 610, beide kommerziell erhältlich bei der Wacker-Chemie GmbH;
- einen linearen oder verzweigten Vernetzer, welcher entweder nur Methylsiloxy-Einheiten in der Kette aufweist (Homopolymer-Vernetzer) oder aus Methylsiloxy- und Dimethylsiloxy-Einheiten zusammengesetzt ist (Copolymer-Vernetzer) und somit Si-H-Gruppen aufweist, wobei die Kettenenden entweder mit Trimethylsiloxy-Gruppen oder Dimethylsiloxy-Gruppen abgesättigt sind. Typische Vertreter dieser Produktklasse sind zum Beispiel Polysiloxane mit hohem Gehalt an reaktivem Si-H wie die Vernetzer V24, V90 oder V06, welche bei der Wacker-Chemie GmbH kommerziell erhältlich sind;
- ein Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA^{®} 17 oder CRAO 42, kommerziell erhältlich bei der Wacker-Chemie GmbH;
- einen silikonlöslichen Platinkatalysator wie zum Beispiel einen Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Üblicherweise wird das Silikon-Release-System im unvernetzten Zustand aufgetragen und nachträglich vernetzt.

Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennmittels nicht mehr oder nur zu einem geringen Teil stattfindet. Daher wird bei der Herstellung von antiadhäsiven Silikonbeschichtungen die Anwesenheit von Katalysatorgiften, insbesondere von Platingiften, in der Regel streng vermieden.

Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebmassen eingesetzt werden.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise mit UV-härtbaren radikalisch vernetzenden Siloxanen wie etwa acrylatmodifizierten Siloxanen verwendet werden. Ebenso ist die Verwendung von elektronenstrahlhärtbaren Silikonacrylaten möglich.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an Siliziumatome gebundene Kohlenwasserstoffreste aufweisen, in Gegenwart eines Photosensibilisators vernetzt werden (siehe z.B. EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte, direkt an Siliziumatome gebundene Kohlenwasserstoffreste aufweisen, und Organopolysiloxanen mit direkt an Siliziumatome gebundenen Vinylgruppen in Gegenwart eines Photosensibilisators erfolgt. Solche Massen werden beispielsweise in der US 4,725,630 beschrieben.

Beim Einsatz von zum Beispiel in der DE 33 16 166 C1 beschriebenen Organopolysiloxanmassen, die mit Epoxygruppen substituierte, direkt an Siliziumatome gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Die Silikonsysteme können je nach Verwendungszweck auch weitere Zusätze, zum Beispiel Stabilisatoren oder Verlaufshilfsmittel, enthalten.

In einer besonderen Ausführungsform der Erfindung ist die Silikon-Trennschicht eine Haftklebmasse Hkm, die
- mindestens eine Silikon-Haftklebmasse Si-Hkm, welche aus einer Zusammensetzung erhältlich ist, die
- mindestens ein mehrere Si-Alkenylgruppen aufweisendes Polysiloxan
- mindestens eine mehrere Si-H-Gruppen aufweisende Substanz
- mindestens einen Hydrosilylierungskatalysator
   umfasst, sowie
- mindestens ein Silikonharz umfasst;
wobei die Klebkraft der Haftklebmasse Hkm mit steigendem Flächengewicht zunimmt.

Besonders bevorzugt ist die Silikon-Trennschicht eine Haftklebmasse Hkm, die
- mindestens eine Silikon-Haftklebmasse Si-Hkm, welche aus einer Zusammensetzung erhältlich ist, die
- mindestens ein mehrere Si-Alkenylgruppen aufweisendes Polysiloxan
- mindestens eine mehrere Si-H-Gruppen aufweisende Substanz
- mindestens einen Hydrosilylierungskatalysator
   umfasst, sowie
- mindestens ein Silikonharz umfasst;
wobei die Klebkraft der Haftklebmasse Hkm mit steigendem Flächengewicht zunimmt und die Trennkraft des Releaseliners gegenüber einer beliebigen, auf der Silikon-Trennschicht (SR) aufliegenden Haftklebmasse 2 bis 100 cN/cm beträgt. Insbesondere beträgt dabei die Trennkraft des Releaseliners gegenüber einem Klebeband, das eine geschäumte, Polyacrylat-basierte Schicht umfasst, zum Beispiel gegenüber dem Klebeband tesa^{®} ACXplus 7812, 2 bis 100 cN/cm. Insgesamt hat sich gezeigt, dass, wenn die Silikon-Trennschicht eine Haftklebmasse Hkm ist, sehr gute, insbesondere nicht zu niedrige Trennkräfte gegenüber schwerfließenden Polyacrylat-basierten Haftklebmassen erzielt werden.

Das mehrere Si-Alkenylgruppen aufweisende Polysiloxan der Silikon-Haftklebmasse Si-Hkm ist bevorzugt ein mehrere Si-Vinylgruppen enthaltendes Polydiorganosiloxan, insbesondere ein mehrere Si-Vinylgruppen enthaltendes Polydimethylsiloxan.

Die Si-H-Gruppen aufweisende Substanz der Silikon-Haftklebmasse Si-Hkm ist bevorzugt ein linearer oder verzweigter Vernetzer, welcher aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind.

Der Hydrosilylierungskatalysator ist bevorzugt ein üblicher, Pt-basierter Katalysator für die Addition der Si-H-Gruppen an die Alkenylgruppen. Er ist bevorzugt zu 50 ppm bis 1000 ppm in der Haftklebmasse Hkm enthalten.

Das Silikonharz der Haftklebmasse Hkm ist bevorzugt ein MQ-Silikonharz. Bevorzugt enthält das Silikonharz Si-gebundene Alkyl- und/oder Alkenylreste, insbesondere Methyl- und/oder Vinylreste, besonders bevorzugt Methylreste an den nicht für Si-O-Si-Brücken vergebenen Valenzen der Siliziumatome.

Das molare Verhältnis von Si-H-Gruppen zu den Si-Alkenylgruppen des Polysiloxans der Silikon-Haftklebmasse Si-Hkm beträgt bevorzugt 1,3:1 bis 7:1.

Bei Verwendung der beschriebenen Haftklebmasse Hkm als Silikon-Trennschicht des erfindungsgemäßen Liners lassen sich die Klebkraft und damit verbunden das Releaseverhalten der Trennschicht vorteilhaft über die Schichtdicke der aufgetragenen Haftklebmasse Hkm sowie über den Anteil des Silikonharzes steuern. Ein steigendes Auftragsgewicht der Haftklebmasse Hkm hat eine Erhöhung der Klebkraft und damit eine Erhöhung der benötigten Trennkräfte zum Entfernen des Releaseliners von der mit ihm bedeckten Klebmasse zur Folge.

Der erfindungsgemäße Releaseliner weist bevorzugt an genau einer seiner beiden Hauptseiten eine Silikon-Trennschicht wie vorstehend beschrieben auf. Im Falle des asymmetrischen Aufbaus des Releaseliners wie vorstehend beschrieben umfasst der Releaseliner bevorzugt den folgenden Schichtaufbau, besonders bevorzugt besteht er aus dem folgenden Schichtaufbau:
Silikon-Trennschicht - (POK)-(PPK)-(POK) - Verankerungsschicht - (PEL).

Ein weiterer Gegenstand der Erfindung ist ein Verfahren zur Herstellung eines erfindungsgemäßen Releaseliners, wobei der Schichtaufbau des Releaseliners mittels Coextrusion erzeugt wird. Das erfindungsgemäße Verfahren ist gegenüber einem herkömmlichen Verfahren, bei dem die einzelnen Schichten, z.B. als Folien, separat erzeugt und dann aufeinander laminiert werden, deutlich effizienter und führt mindestens zu vergleichbarer Interlaminathaftung des Releaseliners.

### Beispiele

### Aufbau der Releaseliner:

### Liner 1

Mittels Coextrusion wurde ein Releaseliner mit folgendem Schichtaufbau hergestellt:
- 30 µm LDPE (0,919 g/cm³)
- 20 µm Verankerungsschicht (Infuse^{®} 9010, Dow)
- 80 µm heterophasisches Impact Polypropylen Copolymer mit 8 Gew.-% Farbbatch.

Der Tab für die Prüfungen wurde auf der LDPE-Seite angebracht.

### Liner 2 (Vergleichsbeispiel)

Mittels Lamination (Rasterwalzen) wurde ein Releaseliner mit folgendem Schichtaufbau hergestellt:
- 30 µm LDPE (0,919 g/cm³)
- 2 µm Zwei-Komponenten-Polyurethan-Kaschierklebstoffsystem (Liofol^{®} UR 7780 / UR6080, Henkel)
- 80 µm heterophasisches Impact Polypropylen Copolymer mit 8 Gew.-% Farbbatch.

Der Tab für die Prüfungen wurde auf der LDPE-Seite angebracht.

### Prüfmethoden

### - Delaminieren:

Der zu testende Liner wird auf eine Breite von 15 mm zugeschnitten. Ein ebenfalls 15 mm breiter Tab aus PET/PE-Laminat wird bei 190 °C für 3 Sekunden und 3 bar Druck mittels eines Metallstempels mit einer Fläche von 15x15 mm auf das zu testende Material verschweißt. Nach Auskühlung des geschaffenen Verbunds wird dieser freihängend (T-Peel) mit einer Geschwindigkeit von 300 mm/min auseinandergezogen. Dabei wird die Kraft aufgezeichnet, die benötigt wird, um einen Adhäsivbruch an der Schichtgrenzfläche (POL)-(PER) bzw. LDPE-PP zu erzeugen. Aus dieser Messung werden zwei Messwerte erhalten;
- ein höherer Anfangspeak, der dem initialen Delaminieren entspricht, und
- ein konstanter Messwert, der der realen Delaminationskraft der beiden Materialien entspricht. Hierin wird der zweite, konstante Messwert angegeben.

### - Anwendungstechnischer Test (Tabbing-Test):

Zwei Streifen des mit dem Liner versehenen Testtapes (tesa^{®} ACX^{plus} 7812) werden in einem Abstand von ca. 1 cm in Längsrichtung hintereinander auf das gewünschte Substrat aufgebracht. Ein Tab wird als Anfasser auf den Anfangsbereich des ersten Liners aufgebracht. Daneben werden beide Liner mit einer Brücke aus einem Tab verbunden, indem das eine Ende des Tabs auf den Endbereich des ersten Liners und das andere Ende des Tabs auf den Anfangsbereich des zweiten Liners des anderen Steifens aufgeschweißt wird.

Die Verschweißung wird bei 190 °C, 3 bar Druck und 3 Sekunden Verschweißzeit mittels eines Metallstempels durchgeführt. Als Tab und Bridge wird ein PET/PE Laminat verwendet. Mit Hilfe des Anfassers soll der Liner vom Testtape in einem Schritt entfernt werden.

Bewertungsschema: Tabbing-Test
+: Liner lässt sich durch Tab und Bridge zu 100% in einem Schritt vom Testtape entfernen, unabhängig von der Position von Tab und Bridge auf dem Testtape,
o: Liner lässt sich durch Tab und Bridge zu 100% in einem Schritt vom Testtape entfernen, wenn Tab und Bridge direkt am Rand des Testtapes positioniert werden.
-: Liner lässt sich nicht vom Testtape entfernen. Es kommt zum Abriss des Tabs vom Liner oder zum Spalten der einzelnen Schichten des Liners.

**Ergebnisse:**

| Liner Nr. | Delaminieren (N/cm) | Tabbing Test |
|---|---|---|
| 1 | 18,68 | + |
| 2 | 11,03 | + |

## Patentansprüche

1. Releaseliner zur Verwendung auf Haftklebmassen, umfassend
- eine Lage (POL), umfassend eine oder mehrere Schichten und enthaltend in jeder Schicht zu insgesamt mindestens 80 Gew.-%, jeweils bezogen auf das Gesamtgewicht der Schicht, ein oder mehrere Polyolefine,
wobei jede Schicht der Lage (POL) Polypropylen enthält;
- mindestens eine Schicht (PEL), enthaltend zu mindestens 80 Gew.-%, bezogen auf das Gesamtgewicht der Schicht (PEL), Polyethylen,
wobei jede Schicht (PEL) durch eine Verankerungsschicht mit der Lage (POL) verbunden ist.

2. Releaseliner gemäß Anspruch 1, **dadurch gekennzeichnet, dass** das Polyethylen der Schicht (PEL) ein low density-Polyethylen (LDPE) ist.

3. Releaseliner gemäß Anspruch 2, **dadurch gekennzeichnet, dass** das Low density-Polyethylen (LDPE) eine Dichte von ≤ 0,925 g/m³ hat.

4. Releaseliner gemäß mindestens einem der vorstehenden Ansprüche, **dadurch gekennzeichnet, dass**
die Schicht (PEL) eine Schichtdicke von 10 bis 45 µm aufweist.

5. Releaseliner gemäß mindestens einem der vorstehenden Ansprüche, **dadurch gekennzeichnet, dass**
die Lage (POL) eine Schicht (PPK), enthaltend zu mindestens 80 Gew.-% Polypropylen, umfasst.

6. Releaseliner gemäß mindestens einem der vorstehenden Ansprüche, **dadurch gekennzeichnet, dass** die Lage (POL) aus einer Schicht (PPK) besteht.

7. Releaseliner gemäß mindestens einem der Ansprüche 1 bis 5, **dadurch gekennzeichnet, dass** die Lage (POL) eine Schicht (PPK) und eine direkt auf die Schicht (PPK) folgende Polyolefinschicht (POK) umfasst, welche mindestens 25 Gew.-% Poylethylen sowie mindestens 20 Gew.-% Polypropylen, jeweils bezogen auf das Gesamtgewicht der Polyolefinschicht (POK), enthält.

8. Releaseliner gemäß mindestens einem der vorstehenden Ansprüche, **dadurch gekennzeichnet, dass** die Verankerungsschicht mindestens ein Polyolefin-Copolymer umfasst.

9. Verfahren zur Herstellung eines Releaseliners gemäß mindestens einem der Ansprüche 1 bis 8, **dadurch gekennzeichnet, dass** der Schichtaufbau des Releaseliners mittels Coextrusion erzeugt wird.
